# EUROPEAN PATENT APPLICATION

(11) **EP 4 624 092 A1**
(43) Date of publication of application: **01.10.2025**
(21) Application number: 25165616.1
(22) Date of filing: 24.03.2025
(51) Int. Cl.: B23Q 1/03, B27C 5/06, B27M 1/08

(54) **MACHINE FOR MACHINING WORKPIECES COMPRISING AN INTERFACE ELEMENT**

(30) Priority: 28.03.2024 IT 202400006955
(71) Applicant: SCM Group S.p.A., 47921 Rimini (RN) (IT)
(72) Inventor: PENTITI, Federico, 47921 Rimini (RN) (IT); GIGLIOTTI, Fabrizio, 47921 Rimini (RN) (IT); SEBASTIANI, Giovanni, 47921 Rimini (RN) (IT); BIANCONI, Francesco, 47921 Rimini (RN) (IT)
(74) Representative: Tiburzi, Andrea

(57) **Abstract**

The present invention relates to a machine (1) for machining workpieces, comprising one or more support bars (11) adapted to support a sacrificial bar (B); a support plane (12), on which said one or more support bars (11) are arranged; said machine (1) being characterized in that said sacrificial bar (B) comprises at least one cavity (C₁₋ₙ) comprising an access portion (pa) and a locking portion (ps), and in that said support bar (11) comprises an interface element (10) comprising at least one interlocking element (110₁₋ₙ) configured to removably engage with said cavity (C₁₋ₙ) for securing said sacrificial bar (B) to said interface element (10), said at least one interlocking element (110₁₋ₙ) being slidable within said cavity (C₁₋ₙ) between said access portion (pa), where said interlocking element (110₁₋ₙ) is withdrawable or insertable from/into the cavity (C₁₋ₙ), and said locking portion (ps), where said interlocking element (110₁₋ₙ) is removably locked so as to secure said sacrificial bar (B) onto said interface element (10) fixed to said support bar (11).

## Description

The present invention relates to a machine for machining workpieces, such as wooden panels or the like, comprising one or more support bars, each of which is equipped with an interface element which in turn comprises one or more interlocking elements configured to allow a removable engagement with a respective sacrificial bar. This configuration therefore facilitates the fastening and/or removal of the sacrificial bar from the respective support bar, thereby enabling a quick and efficient replacement of the sacrificial bar.

Hereinafter, the description will refer to a machining centre or machine for machining structural elements; however, it is evident that the invention should not be considered limited to this specific application.

### Background Art

Machines for wood machining are well known, such as machining centres for structural components, comprising one or more support bars on which respective "sacrificial bars" can be arranged and secured.

Such sacrificial bars are typically made of wood or similar materials.

When the workpiece is arranged on at least one sacrificial bar, it can be held in position by fastening means, such as suction cups or clamps, or simply by its own weight. Once secured or held in place, the workpiece can undergo various machining operations via a movable machining unit or movable group along three linear axes and rotating about one, two, or three rotational axes.

During machining, the sacrificial bars supporting the workpiece can become worn, grooved, shaped, and/or unintentionally damaged, and may therefore require replacement.

In any case, in order to properly machine the workpiece, each sacrificial bar must be secured to the respective support bar. This fastening is typically carried out manually by an operator using multiple screws and/or bolts, in order to lock the sacrificial bar onto its corresponding support bar.

However, such manual fastening is a slow and inefficient process that may cause machining delays, for instance when replacing one or more sacrificial bars.

In light of the above, it is desirable to minimize the replacement time for sacrificial bars.

### Object of the Invention

The object of the present invention is to overcome the aforementioned drawbacks by providing a machine for machining workpieces that facilitates the fastening and/or removal of a sacrificial bar to/from the respective support bar in a quick and efficient manner.

It is therefore object of the present invention a machine for machining workpieces as claimed in claim 1.

Preferred embodiments are described in the dependent claims.

### List of Accompanying Figures

The present invention will now be described, by way of illustrative but non-limiting example, with reference to an embodiment and the attached figures, in which:
Figure 1 shows a perspective view of a machine for machining workpieces, according to one embodiment of the present invention;
Figure 2 shows a detailed perspective view of the machine shown in Figure 1, wherein the support bars, an interface element mounted on one support bar, and the sacrificial bars are visible;
Figure 3 shows a perspective view of a sacrificial bar comprising a plurality of cavities for securing to the respective support bar, according to an embodiment of the present invention;
Figure 4 shows a detailed view of the sacrificial bar shown in Figure 3;
Figure 5 shows a perspective view of an interface element comprising a plurality of interlocking elements, according to an embodiment of the present invention;
Figure 6 shows a detailed view of the plurality of interlocking elements shown in Figure 5.

### Detailed Description of the Invention

In the various figures, similar parts will be indicated with the same reference numerals.

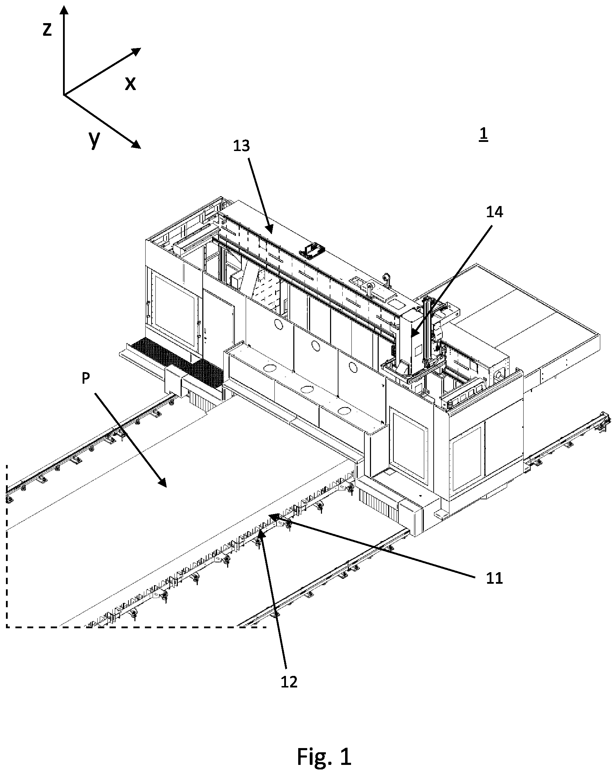

With reference to Figure 1, a perspective view is shown of a machine 1 for machining workpieces P, such as panels for wall, ceiling, or roof elements, and/or straight or curved structural beams made of wood.

However, the workpieces P may also be made from any material other than wood, without departing from the scope of the invention.

Machine 1 may comprise a crossbeam 13 movable in the direction of a first axis X above one or more support bars 11 of the machine 1 itself. For example, the movable crossbeam may be positioned on one or more rails of the machine 1 in such a way that it can be moved above the support bars 11.

The machine 1 may further comprise a unit 14 movable along the crossbeam 13 in the direction of a second axis Y, perpendicular to the first axis X, and in the direction of a third axis Z, perpendicular to both the first axis X and second axis Y.

The movable unit 14 allows one or more machining operations to be performed on workpieces P placed on the machining plane of the machine 1, for instance by means of one or more machining tools.

Thus, when a workpiece P is placed on the work plane, the movable unit 14 moves along the plane (via guide elements) until at least a portion of the workpiece P is positioned in correspondence with the movable unit 14 to be machined.

The movable unit 14 can also rotate around one, two, or three rotational axes.

Machining may be carried out by a machining tool configured to rotate about its own rotational axis, whereby the rotation of the tool enables the machining of the workpiece P.

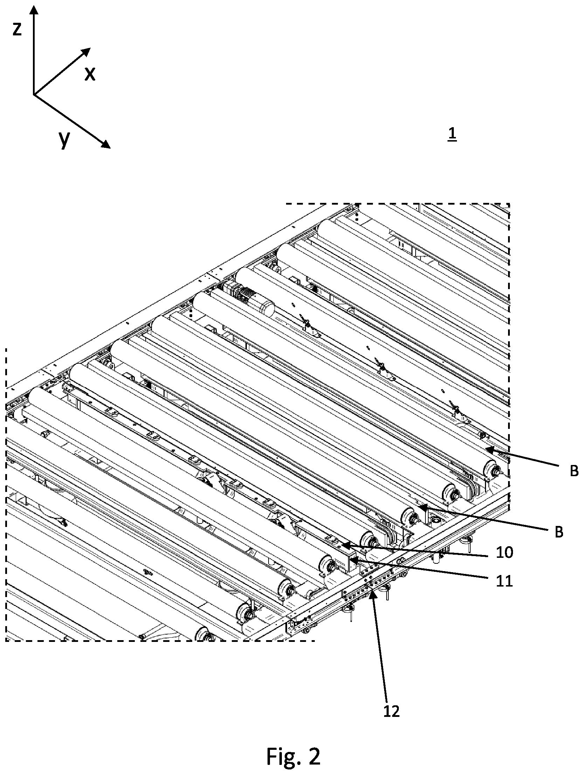

Figure 2 shows a detailed perspective view of the support plane 12 of the machine 1, where the support bars 11 arranged on the support plane 12 are visible along with a plurality of sacrificial bars B.

In some embodiments, the support plane 12 may be mounted on a base of the machine 1, or directly fastened to a supporting surface of the machine 1, as shown for example in Figure 1.

The sacrificial bars B define the machining plane of the machine 1.

Each support bar 11 is adapted to support a respective sacrificial bar B, on which one or more workpieces P to be machined may be arranged.

For example, the machine 1 may be equipped with 32 support bars 11 for securing the respective 32 sacrificial bars B.

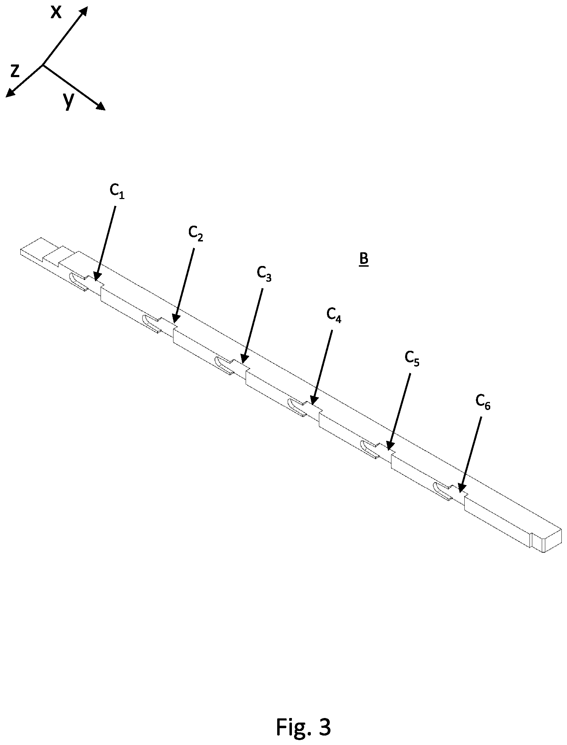

As shown in Figure 3, each sacrificial bar B comprises at least one cavity C₁₋ₙ for securing to the respective support bar 11.

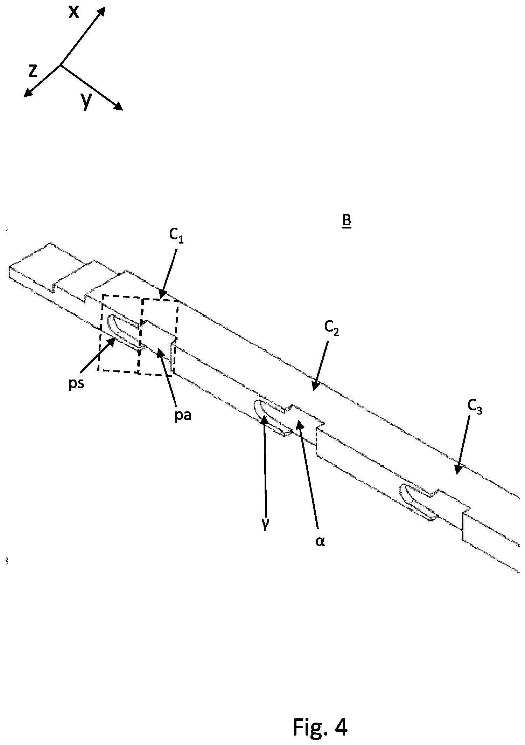

Figure 4 shows a detailed view of the sacrificial bar B, illustrating construction details of the cavities C₁₋ₙ.

Each cavity C₁₋ₙ comprises an access portion pa and a locking portion ps that allow a removable engagement with the respective support bar 11.

The cavities C₁₋ₙ may be undercut and comprise a bottom surface α and at least one stop wall γ located in the locking portion ps. In this case, the locking portion ps may be formed between at least one stop wall γ and the bottom surface α.

The removable engagement between the sacrificial bar B and the respective support bar 11 is achieved via an interface element 10 which in turn comprises at least one interlocking element 110₁₋ₙ configured to removably engage with a corresponding cavity C₁₋ₙ of the sacrificial bar B for securing the sacrificial bar B onto the interface element 10.

Accordingly, the interface element 10 enables interfacing between a support bar 11 (on which the interface element 10 is fixed) and a respective sacrificial bar B.

In some embodiments, the sacrificial bar B may also be fastened permanently to the interface element using a screw or bolt to prevent sliding or disengagement of the sacrificial bar B from the interface element 10.

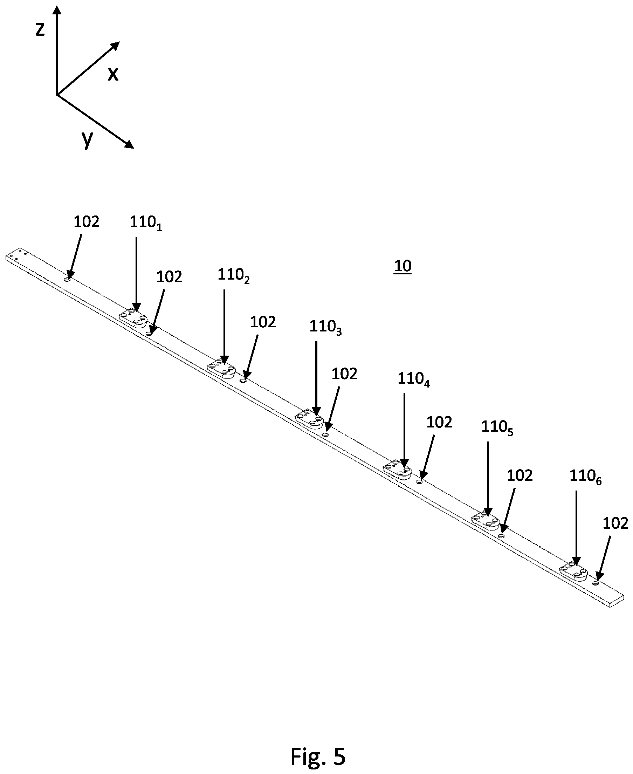

Figure 5 shows a perspective view of an interface element 10.

The interface element 10 comprises at least one interlocking element 110₁₋ₙ. Each interlocking element 110₁₋ₙ is fixed to the base of the interface element 10 using fastening means, such as screws or bolts passing through one or more holes in the interlocking element 110₁₋ₙ.

In some embodiments, the interlocking element 110₁₋ₙ may be bonded to the base of the interface element 10, or may be integrally formed with the base, for example using an additive manufacturing process (so-called "Additive Manufacturing" or AM) or another fabrication method, so that the interface element 10 is formed as a single piece. In this case, the interface element 10 may be made entirely of metallic, plastic, or other material, eliminating the need for fastening means to secure the interlocking elements 110₁₋ₙ to the base and resulting in an integral structure made of separate components.

The interface element 10 may comprise one or more through holes 102 for securing the interface element 10 onto the support bar 11 by means of fastening means.

As shown in Figure 5, such through holes 102 may be positioned on the base of the interface element 10.

The interlocking element 110₁₋ₙ is configured to slide within a cavity C₁₋ₙ between the access portion pa, where the interlocking element 110₁₋ₙ is withdrawable or insertable from/into the cavity C₁₋ₙ, and the locking portion ps, where the interlocking element 110₁₋ₙ is removably locked to secure the sacrificial bar B on the interface element 10.

For example, Figure 5 shows an interface element 10 comprising six interlocking elements 110₁₋ₙ to allow a more stable engagement with the respective sacrificial bar B.

However, it is evident that the number of interlocking elements 110₁₋ₙ should not be considered limited to that shown in Figure 5, and may in fact include more or fewer interlocking elements 110₁₋ₙ.

Each of the interlocking elements 110₁₋ₙ may be arranged along a longitudinal axis of the interface element 10, for example along its base, at a positioning interval corresponding to a positioning interval of the respective cavities C₁₋ₙ of the sacrificial bar B. In this way, the interlocking elements 110₁₋ₙ can align correctly with the respective cavities C₁₋ₙ of the sacrificial bar B during insertion and removal.

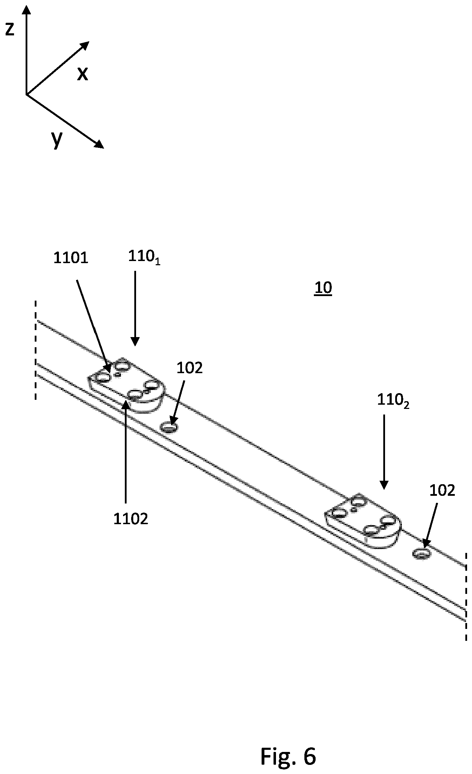

Figure 6 shows a detailed view of the plurality of interlocking elements shown in Figure 5.

As shown in Figure 6, each interlocking element 110₁₋ₙ may comprise a base, a wider upper surface 1101 opposite the base, and at least one inclined side surface 1102 engageable with a respective stop wall γ of the locking portion ps of the corresponding cavity C₁₋ₙ, with a complementary shape.

For example, if the cavity C₁₋ₙ is undercut, the interlocking element 110₁₋ₙ may have a complementary dovetail shape matching the locking portion ps of the cavity C₁₋ₙ, thereby allowing a removable and stable engagement between the interface element 10 and the respective sacrificial bar B.

In this case, the cavity C₁₋ₙ would also have a dovetail profile and may be made using a dovetail cutter, inserted through the access portion pa of the sacrificial bar B and advanced internally to form the locking portion ps, then exited again through the access portion pa.

However, it is evident that both the shape of the cavity C1-n and the shape of the upper surface 1101 of the interlocking element 1101-n should not be considered limited to the specific form described.

For example, the upper surface 1101 may have an arbitrary shape such as rectangular, oval, or irregular, for instance, an elongated shape allowing a stable and removable engagement between the interface element 10 and the respective sacrificial bar B.

In alternative embodiments to those shown in Figures 1-6, the upper surface of the interlocking element 110₁₋ₙ may comprise a circular shape, and the interlocking element 110₁₋ₙ may comprise a truncated conical stem extending between the base and the upper surface.

Advantageously, the machine 1 for machining workpieces P, according to the present invention, allows for the fastening and/or removal of a sacrificial bar B to/from the respective support bar 11 of the machine 1 in a quick and efficient manner, thereby minimizing the replacement time of the sacrificial bars B.

A further advantage is that the machine 1 enables a removable engagement with a respective sacrificial bar B without the need for multiple fastening screws, which would otherwise require lengthy installation and removal procedures.

Indeed, the interface element 10 of machine 1 comprises one or more interlocking elements 110₁₋ₙ, each of which enables a removable engagement with a respective sacrificial bar B.

The present invention has been described by way of preferred embodiments, provided for illustrative but non-limiting purposes, and it is to be understood that variations and/or modifications may be made by those skilled in the art without departing from the scope of protection as defined by the attached claims.

## Claims

1. Machine (1) for machining workpieces, comprising:
one or more support bars (11), each support bar (11) being adapted to support a sacrificial/martyr bar (B);
a support plane (12), on which said one or more support bars (11) are arranged;
**said machine (1) being characterized in that** said sacrificial bar (B) comprises at least one cavity (C₁₋ₙ) comprising an access portion (pa) and a locking portion (ps), **and in that** said support bar (11) comprises an interface element (10) comprising at least one interlocking element (110₁₋ₙ) configured to removably engage with said cavity (C₁₋ₙ) for securing said sacrificial bar (B) to said interface element (10), said at least one interlocking element (110₁₋ₙ) being slidable within said cavity (C₁₋ₙ) between said access portion (pa), where said interlocking element (110₁₋ₙ) is withdrawable/retractable or insertable from/into the cavity (C₁₋ₙ), and said locking portion (ps) where said interlocking element (110₁₋ₙ) is removably locked to secure said sacrificial bar (B) on said interface element (10) fixed on said support bar (11).

2. Machine (1) according to claim 1, wherein said interlocking element (110₁₋ₙ) comprises a base, a wider upper surface (1101) opposite said base, and at least one inclined side surface (1102) engageable with a respective stop wall (γ) of said locking portion (ps).

3. Machine (1) according to claim 2, wherein said upper surface (1101) comprises a portion of rectangular or trapezoidal shape and a semi-circular portion extending from a short side of said rectangular or trapezoidal portion.

4. Machine (1) according to claim 2, wherein said upper surface (1101) comprises a circular shape and wherein said interlocking element (110₁₋ₙ) comprises a truncated conical stem extending between said base and said upper surface (1101).

5. Machine (1) according to any of the preceding claims, wherein said interface element (10) comprises one or more through holes (102) for securing, by means of fastening means, said interface element (10) to said support bar (11).

6. Machine (1) according to any of the preceding claims, wherein said cavity (C₁₋ₙ) is undercut and comprises a bottom surface (α), said locking portion (ps) being formed between said at least one stop wall (γ) and said bottom surface (α), and wherein said at least one interlocking element (110₁₋ₙ) has a complementary shape to said locking portion (ps).

7. Machine (1) according to any of the preceding claims, wherein each of said interlocking elements (110₁₋ₙ) is arranged along a longitudinal axis of said interface element (10) at a positioning interval corresponding to a positioning interval of the respective cavities (C₁₋ₙ) of said sacrificial bar (B).

8. Machine (1) according to any of the preceding claims, comprising:
a crossbeam (13), movable above said one or more support bars (11), in the direction of a first axis (X); and
a unit (14), movable along said crossbeam (13), in the direction of a second axis (Y), perpendicular to said first axis (X), and a third axis (Z) perpendicular to said first axis (X) and said second axis (Y), said unit (14) being adapted to perform machining of one or more workpieces (P) when placed on said one or more sacrificial bars (B).

9. Machine (1) according to any of the preceding claims, wherein said interface element (10) is formed as a single piece, preferably wherein said interface element (10) is made entirely of metallic, plastic, or other material.
